# EUROPEAN PATENT APPLICATION

(11) **EP 1 511 250 A2**
(43) Date of publication of application: **02.03.2005**
(21) Application number: 04104046.0
(22) Date of filing: 23.08.2004
(51) Int. Cl.: H04L 12/58, G06F 17/60, H04M 3/527, H04Q 3/00

(54) **Managing incoming calls and/ or messages in a communications system**

(30) Priority: 28.08.2003 US 649778
(71) Applicant: SIEMENS AKTIENGESELLSCHAFT, 80333 München (DE)
(72) Inventor: Holz, Stefan, 81547 München (DE); Liu, Jane, Oakville, Ontario L6J 5R1 (CA); Winikoff, Dave, Sunnyvale, CA 94087 (US)

(57) **Abstract**

In a communications system, incoming calls and/or messages are managed by checking - upon receipt of a call and/or message - if a pre-defined availability status allocated to a recipient of the call and/or message is activated. Upon activation of a pre-defined availability status a pre-defined filter rule is applied to the call and/or message in accordance with the activated availability status. A call and/or message handling action associated with the activated availability status is executed.

## Description

### FIELD OF THE INVENTION

The present invention relates to a method of managing incoming calls and/or messages in a communications system, to an apparatus for managing incoming calls and/or messages in a communications system and to a computer program product.

### BACKGROUND OF THE INVENTION

Pre-defined rules for managing calls or messages are commonly used in communication systems. For instance, implementations of such rules comprise call forwarding functions in telephone systems and notification functions in email systems. Especially in email systems, notification functions are provided in order to inform a sender of a message about a message delivery, a recipient having read the message or a delayed response to message due to e.g. a longer absence of the recipient. Many email systems also provide functionality for notifying an email user of an incoming email message in his message box by means of a text message sent to a mobile phone of the email user.

Another field of application of pre-defined rules for managing calls or messages is filtering unwanted spam emails. Usually, spam emails are filtered by defining criteria for blocking or deleting messages that are sent using a certain email address or that contain certain keywords. However, a major drawback of such solutions is their lack of selectivity, for the willingness to receive or respond to a message often depends on the current situation.

It is an object of the present invention to provide a management of incoming calls and/or messages in a communications system regardless of the respective communication platform and enabling a situational use of call and/or message management functions.

### SUMMARY OF THE INVENTION

The attainment of the above object may be achieved through use of a method according to claim 1, an apparatus according to claim 9 and a computer program product according to claim 10.

A method of managing incoming calls and/or messages in a communications system in accordance with the present invention comprises - upon receipt of a call and/or message - checking if a pre-defined availability status allocated to a recipient of the call and/or message is activated. Upon activation of a pre-defined availability status, a pre-defined filter rule is applied to the call and/or message in accordance with the activated availability status. Further, a call and/or message handling action associated with the activated availability status is executed. An apparatus for managing incoming calls and/or messages in a communications system in accordance with the present invention comprises means for executing above-mentioned steps. A computer program product in accordance with the present invention is stored on a computer usable medium and comprises computer readable means for causing the execution of the above mentioned steps.

In a preferred embodiment of the present invention, the availability status is selectable for activation by the recipient of the call and/or message. This ensures a reliable activation of an availability status on the recipient's demand and simplifies the use of the present invention.

In an other preferred embodiment of the present invention, only one availability status is activated at a time. This enables a collision-free application of filter rules and a consistent execution of call and/or message handling actions.

In yet an other preferred embodiment of the present invention, any call and/or message is signalised and routed to the recipient by applying the filter rule relating to an availability status in which the recipient is prepared to receive calls and/or messages. This allows switching off any filtering and call and/or message handling functionality upon recipient's demand and thus preventing an unnecessary tie-up of system resources.

In yet an other preferred embodiment of the present invention, only calls and/or messages originating from a pre-determined set of callers and/or senders are signalised and forwarded to the recipient by applying the filter rule. This makes it possible to reduce the burden of answering calls and/or messages to an indispensable minimum.

In yet an other preferred embodiment of the present invention, any call and/or message is forwarded to an other pre-defined recipient by executing the call and/or message handling action. This enables realising proxy role within a communications system.

In yet an other preferred embodiment of the present invention, the call and/or message handling action comprises notifying the recipient of attempted communication by means of a message directed to a selected communication device allocated to the recipient. This enables an easy integration of unified messaging system functionality

In yet an other preferred embodiment of the present invention, the call and/or message is routed to a destination associated with an entry in a personal scheduler of the recipient. This provides convenient configuration of situational call and/or message forwarding functionality and enables using synergies from employing computer-based personal schedulers.

The foregoing and other features and advantages of the present invention will be more readily apparent from the following detailed description of a preferred embodiment of the present invention, which proceeds with reference to the accompanying drawings.

### BRIEF DESCRIPTION OF THE DRAWINGS

FIG. 1 is flow diagram of a method of managing incoming calls and/or messages in a communications system.
FIG. 2 is a block diagram of components of a user profile administered by a call/message management controller.
FIG. 3 is a block diagram of a communications system comprising a private branch exchange, unified messaging system and a call/message management controller.

### DETAILED DESCRIPTION OF THE PREFERRED EMBODIMENTS

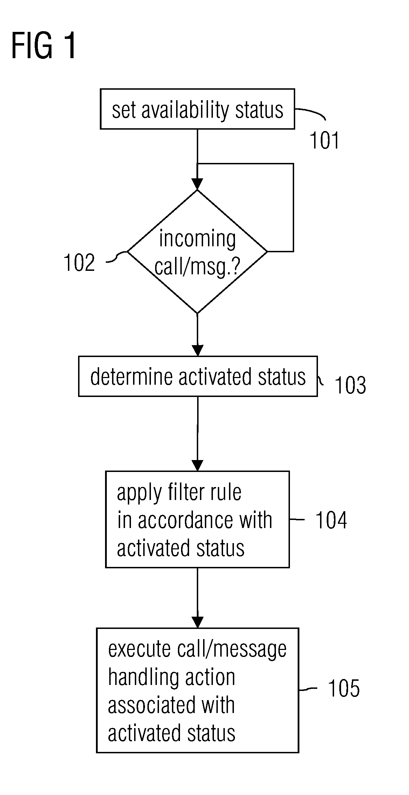

Referring to FIG. 1, there is illustrated a flow diagram of a method of managing incoming calls and/or messages in a communications system. First, a user or recipient respectively selects an availability status from a list associated with a user profile (step 101). Only one availability status can be activated at a time. The selection of an availability status can be made by using a mobile phone or a personal computer offering capabilities for displaying availability states selectable for activation, data input capabilities and capabilities for connecting to a call/message management controller described below. Preferably, an availability status should be chosen that reflects the current readiness of a user of accepting a call or a message, as characterised by e.g. 'in office', 'in conference', 'on holiday' etc.. In a next step incoming calls and messages directed to the user are monitored (step 102). If a call or message has been received, the activated availability status will be determined by querying a database allocated to the call/message management controller described below (step 103).

After having determined the activated availability status, a filter rule is applied to the incoming call or message in accordance with the activated availability status (step 104). By applying a filter rule relating to an availability status in which the user is prepared to receive calls and messages, any call and message can be signalised and routed to the user. Alternatively, only calls and messages originating from a pre-determined set of callers or senders are signalised and forwarded to the recipient by applying a filter rule.

Moreover, a call/message handling action associated with the activated availability status is executed (step 105). This can effect that any call or message is forwarded to an other pre-defined recipient. Alternatively, a call/message handling action can comprise notifying the user of attempted communication by means of a message directed to a selected communication device allocated to the user.

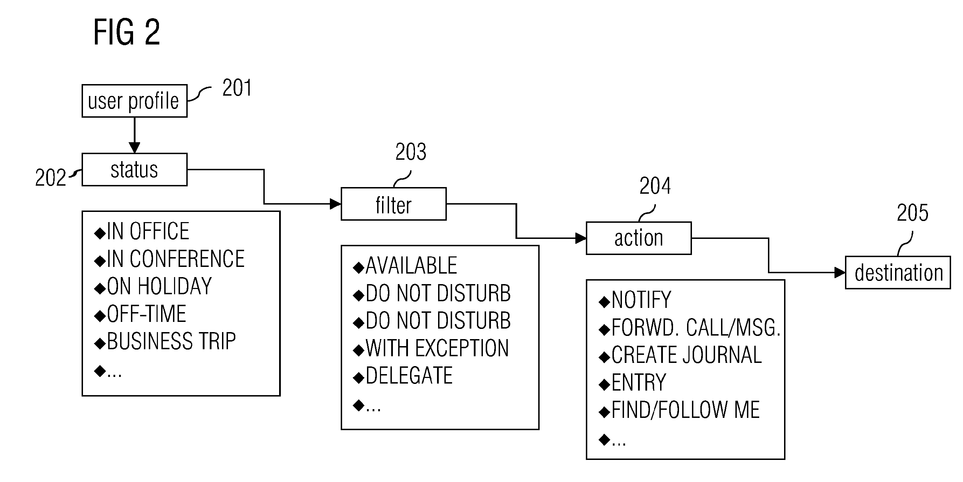

Referring now to FIG. 2, there is illustrated a block diagram of components of a user profile 201 administered by the call/message management controller. The user profile 201 is analysed during the execution of the method of managing incoming calls and/or messages by the call/message management controller and stored independently for each user in the database allocated to the call/message management controller. At a top level the user profile 201 comprises a user configurable list of availability states 202 selectable for activation. The list of availability states 202 usually should cover the most likely availability scenarios like
- IN OFFICE,
- IN CONFERENCE,
- ON HOLIDAY,
- OFF-TIME,
- BUSINESS TRIP.

Preferably, the user is offered the possibility to enter additional availability states in the database on demand. By each entry in the list of availability states 202, at least one filter rule to be applied and at least one call/message handling action to be executed is identified. Consequently, once the definition of availability states and filter rules and call/message handling actions allocated thereto has been completed, only an availability state has to be activated in order to use the desired call/message management functionality.

Each entry in the list of availability states is associated with at least one filter rule stored in a list of selectable filter rules 203 at the next level of the user profile 201. Each entry in the list of filter rules 203 defines how incoming calls or messages should be treated in general. The list of filter rules 203 typically covers filter schemes like
- AVAILABLE (i.e. no filter rule applied),
- DO NOT DISTURB (i.e. no signalling of incoming calls and messages),
- DO NOT DISTURB WITH EXCEPTION (e.g. based on a VIP contact list provided by a Groupware application, a delivery indicator like 'URGENT', 'PRIVATE' or 'CONFIDENTIAL', a phone number prefix like +49 89 722 for Siemens, Munich, Location Hofmannstraße or based on an email domain like siemens.com),
- DELEGATE (i.e. forwarding calls and messages to a proxy person).

At a more advanced level of a call/message management controller implementation additional filter schemes can be provided covering criteria like
- AGE OF MESSAGE,
- REMINDER (e.g. task, appointment or birthday),
- MESSAGE SUBJECT KEY WORD,
- MESSAGE BODY KEY WORD,
- NUMBER OF MISSED CALLS/MESSAGES (e.g. greater than an average value),
- NUMBER OF MISSED CALLS/MESSAGES FROM SAME CALLER/SENDER,
- NUMBER OF MISSED MESSAGES REGARDING KEY WORDS.

In many cases, multiple combinations of above-mentioned filter schemes are possible. For example, in case of the 'DO NOT DISTURB WITH EXCEPTION' filter scheme, a disturbance can be allowed, if a caller/sender is a member of a VIP contact list or a specified email domain, and if a message is urgent or a call is made from a terminal having a specified phone number prefix. Using a VIP contact list based on an Groupware application like MS Exchange/Outlook or Lotus Domino offers the advantage that a contact entry including information about phone number, mobile phone number or email address just has to be added to the list for making the call/message management controller filter calls and messages by means of a contact person's phone number, mobile phone number or email address regardless of the communication medium currently used.

Moreover, each entry in the list of availability states is also associated with at least one call/message handling action stored in a list of selectable call/message handling actions 204 at the third level of the user profile 201. A call/message handling action will take effect after applying at least one filter rule associated with the currently activated availability status. Typical options for call/message handling actions are
- NOTIFY RECIPIENT (e.g. send email or text message, page recipient),
- FORWARD CALL/MESSAGE (e.g. to proxy person phone number, fax number, email address or to a voice mail box),
- CREATE JOURNAL ENTRY (e.g. of inbound activity),
- FIND/FOLLOW ME.

The 'FIND/FOLLLOW ME' option enables routing a call or a message to a destination associated with an entry in a personal electronic scheduler of the user. Such an entry may comprise information about a contact person to be visited or met, date and time of a visit or meeting and additional call or message forwarding information, e.g. forward to contact person or proxy person as indicated in the personal electronic scheduler of the user.

An email, a text message, paging information or a journal entry may comprise information about
- CALL/MESSAGE TYPE (e.g. missed call or email, fax or voice message),
- SUBJECT (e.g. of an email address),
- LENGHTH (e.g. of a voice message),
- NUMBER OF PAGES (e.g. of a fax message),
- CALLER/SENDER,
- DATE/TIME OF RECEPTION,
- REPLY OPTIONS.

'REPLY OPTIONS' may comprise information about a mobile phone number for answering by a text message, an office phone number of the caller or sender or a private phone or fax number or email address depending on an answer option selection of the caller or sender. In many cases, a caller or sender identification may be used to select an appropriate 'REPLY OPTION', e.g. as indicated in a contact list provided by a Groupware application. Further, a journal entry may comprise availability information relating to the user and as the case may be, taken action.

Moreover, it is also possible to select multiple call/message handling actions per filter rule. According to a more advanced implementation of a call/message management controller, also the following call/message handling actions are provided:
- CREATE TASK (e.g. in Groupware application, with or without due date),
- VOICE MAIL ANNOUNCEMENT WITH TIME DEPENDENCIES (e.g. by using start and end date of availability information and proxy information),
- OUT OF OFFICE REPLY EMAIL WITH TIME DEPENDENCIES (e.g. by using start and end date of availability information and proxy information),
- PLAY ANNOUNCEMENTS/MUSIC (e.g. on holding a call).

In addition to specifying a call/message handling action, options for delivering a call or message may be chosen from a list of destinations options 205. Such a list typically comprises entries like
- EMAIL TYPE (e.g. MS Exchange/Outlook, Lotus Notes, SMTP),
- VOICE MAIL TYPE (e.g. use IMAP4 to trigger message forwarding within enterprise communications network),
- PHONE NUMBER TYPE (e.g. use international format like +1 905 ...),
- TEXT MESSAGE TYPE (e.g. provide text message compliant to Wireless Access Protocol 1.2 Standard, support message forwarding via SMTP to SMS protocol conversion),
- NUMERIC PAGER TYPE,
- ALPHANUMERICE PAGER TYPE.

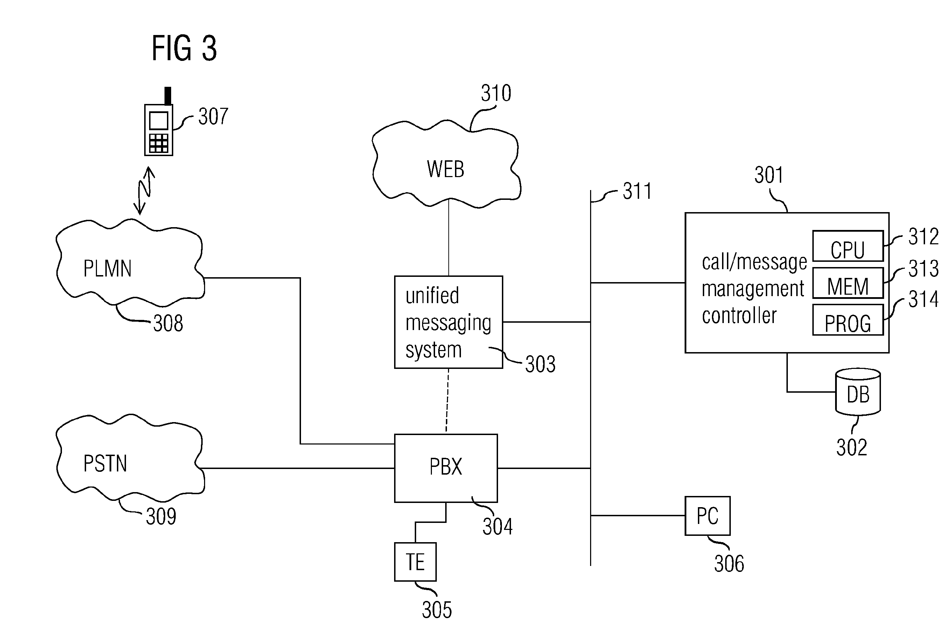

Referring now to FIG. 3, there is illustrated a block diagram of a communications system comprising a call/message management controller 301, a unified messaging system 302 a private branch exchange 304 and a personal computer 306 which are interconnected via e.g. a bus system or data network 311 like a LAN. The private branch exchange 304 enables access for the user to a mobile communications network 308 or to a public fixed telephone network 309 via a terminal equipment 305, e.g. a fixed telephone, connected to a line trunk unit of the private branch exchange 304 or via the personal computer 306 with a computer telephony application installed thereon. Moreover, the private branch exchange 304 also enables access for the user from the terminal equipment 305 or from a mobile telephone 307 in the mobile communications network 308 to the call/message management controller 301.

The unified messaging system 303 comprises the functionality of an email server connected to an packet data network 310 like the internet and also the functionality of a telephony server connected to the private branch exchange 304 and handling reception and management of voice and fax messages. The call/message management controller 301 comprises a processing unit 312 and a memory unit 313 and can access to status information stored in the unified messaging system 303 and in the private branch exchange 304 relating the user, e.g. preferences or activated features and services. After having analysed the status information, the call/message management controller can modify preferences, activated features and services of the user by sending respective control commands to the unified messaging system 303 or to the private branch exchange 304 via specified hardware and software interfaces.

Particularly, sending control commands to the unified messaging system 303 or to the private branch exchange 304 will take the effect that filter rules are applied and call/message handling actions are executed as described above. For this reason, the call/message management controller 301 comprises means for checking, upon receipt of a call or a message, if a pre-defined availability status allocated to the user is activated. The call/message management controller 301 also comprises for applying, upon activation of a pre-defined availability status, a pre-defined filter rule to the respective call or message in accordance with the activated availability status. Additionally, the call/message management controller 301 comprises means for executing a call or message handling action associated with the activated availability status as described above. All these means are preferably software-implement. Thus, in a preferred embodiment of the present invention the call/message management controller 301 has a computer program product 314 stored on a computer usable medium allocated to the call/message management controller 301, e.g. the memory unit 313. The computer program product 314 comprises computer readable means for causing the call/message management controller 301 to execute above-mentioned steps of the method of managing incoming calls and/or messages. Furthermore, the call/message management controller 301 is connected to a database 302 for storing user profiles as described above. Therefore, the call/message management controller 301 can match status information received from the unified messaging system 303 or the private branch exchange 304 with parameters of the user profiles for calculating or determining appropriate control commands to be executed in the unified messaging system 303 or the private branch exchange 304. Besides, both the call/message management controller 301 and the unified messaging system 303 may be implemented as modules integrated in the private branch exchange 304.

The user can use his terminal equipment 305, personal computer 306 or his mobile telephone 307 to define or modify his user profile administered by the call/message management controller 301 and stored in the database 302. By means of a single user interaction, e.g. a one button activation at the terminal equipment 305, personal computer 306 or mobile telephone 307, the user is able to change his availability status effecting that the filter rules are applied in accordance with the activated availability status and that the call/message handling actions associated with the availability status are executed.

The application of the present invention will be further illustrated by means of an application scenario with the user being on a business trip. The user starts by generating a new entry in his user profile for the availability status 'BUSINESS TRIP', if not yet defined. In this status, the user expects several important calls which he intends to accept on his mobile phone 307. Thus he configures his user profile in a manner that contact information relating to the accepted callers will be added to the VIP contact list. Further, the user activates the filter rule 'DO NOT DISTURB WITH EXCEPTION'. Besides, the user selects the call/message handling action 'FORWARD CALL/MESSAGE' and sets his mobile phone number as a parameter. This effects that only calls originating from persons covered by the VIP contact list will be forwarded to the user's mobile phone 307. The user also chooses the call/message handling action 'VOICE MAIL ANNOUNCEMENT WITH TIME DEPENDENCIES' in order to make any caller except those covered by the VIP contact list receive a respective announcement.

Moreover, if the user wants to get additionally notified of urgent email, voice or fax messages, he modifies the filter rule accordingly and selects the call/message handling action 'NOTIFY RECIPIENT' with the parameter 'send text message'. Further, the user configures the call/message handling action 'OUT OF OFFICE REPLY EMAIL WITH TIME DEPENDENCIES' in order to notify a sender of an email that his message will not be answered during the user's business trip. Once the user has completely defined the availability status 'BUSINESS TRIP', he can re-use the respective configuration for the next business trip by simply activating the availability status 'BUSINESS TRIP' without having to completely define the configuration for this status again. If necessary, the can make modifications to his pre-configured user profile.

It is to be noted that many modifications and variations of above embodiments may be made without departing from the novel and advantageous features of the present invention. Accordingly, all such modifications and variations are intended to be included within the scope of the claimed invention.

## Claims

1. A Method of managing incoming calls and/or messages in a communications system comprising the steps of:
- upon receipt of a call and/or message checking if a pre-defined availability status allocated to a recipient of the call and/or message is activated;
- upon activation of a pre-defined availability status applying a pre-defined filter rule to the call and/or message in accordance with the activated availability status; and
- executing a call and/or message handling action associated with the activated availability status.

2. A Method as set forth in claim 1,
wherein the availability status is selectable for activation by the recipient of the call and/or message.

3. A Method as set forth in claim 2,
wherein only one availability status is activated at a time.

4. A Method as set forth in claim 1,
wherein any call and/or message is signalised and routed to the recipient by applying the filter rule relating to an availability status in which the recipient is prepared to receive calls and/or messages.

5. A Method as set forth in claim 1,
wherein only calls and/or messages originating from a pre-determined set of callers and/or senders are signalised and forwarded to the recipient by applying the filter rule.

6. A Method as set forth in claim 1,
wherein any call and/or message is forwarded to an other pre-defined recipient by executing the call and/or message handling action.

7. A Method as set forth in claim 1,
wherein the call and/or message handling action comprises notifying the recipient of attempted communication by means of a message directed to a selected communication device allocated to the recipient.

8. A Method as set forth in claim 1,
wherein the call and/or message is routed to a destination associated with an entry in a personal scheduler of the recipient.

9. An Apparatus for managing incoming calls and/or messages in a communications system comprising:
- means for checking, upon receipt of a call and/or message, if a pre-defined availability status allocated to a recipient of the call and/or message is activated;
- means for applying, upon activation of a pre-defined availability status, a pre-defined filter rule to the call and/or message in accordance with the activated availability status; and
- means for executing a call and/or message handling action associated with the activated availability status.

10. A Computer program product stored on a computer usable medium comprising:
- computer readable means for causing a computer to check, upon receipt of a call and/or message, if a pre-defined availability status allocated to a recipient of the call and/or message is activated;
- computer readable means for causing the computer to apply, upon activation of a pre-defined availability status, a pre-defined filter rule to the call and/or message in accordance with the activated availability status; and
- computer readable means for causing the computer to execute a call and/or message handling action associated with the activated availability status.
